Europäisches Patentamt

European Patent Office

Office européen des brevets

(11) Publication number: **0 047 171**
**A2**

## (12) EUROPEAN PATENT APPLICATION

(21) Application number: **81303985.6**

(22) Date of filing: **01.09.81**

(51) Int. Cl.³: **C 08 J 3/28**
**//C08L23/04**

(30) Priority: **04.09.80 CA 359522**

(43) Date of publication of application:
**10.03.82 Bulletin 82/10**

(84) Designated Contracting States:
**AT BE CH DE FR GB IT LI LU NL SE**

(71) Applicant: **DU PONT CANADA INC.**
**Box 2200 Streetsville Postal Station**
**Mississauga Ontario L5M 2H3(CA)**

(72) Inventor: **White, George**
**10 Wagner Street**
**Glenburnie Ontario, K0H 1S0(CA)**

(74) Representative: **Ellis, John Clifford Holgate et al,**
**MEWBURN ELLIS & CO. 2/3 Cursitor Street**
**London EC4A 1BQ(GB)**

(54) **Process for irradiation of polyethylene.**

(57) A process for the irradiation of homopolymers of ethylene and copolymers of ethylene and higher α-olefins is disclosed. The process comprises subjecting the polymer in the form of granules to an atmosphere of steam, irradiating the polymer in an inert atmosphere with electron or gamma irradiation and reducing the level of free radicals in the irradiated polyethylene by further subjecting the polymer to an atmosphere of steam. The preferred inert atmosphere is steam. The amount of irradiation used is less than 1.5 Mrad. The irradiated polymer, which exhibits improved processability and/or product properties when compared with non-irradiated polymer, may be used in a wide variety of end-uses e.g. fabrication into film, pipe and other articles, using extrusion, injection moulding and blow moulding techniques.

Process for Irradiation of Polyethylene

The present invention relates to a process for the irradiation of polyethylene and especially to a process for the irradiation of homopolymers of ethylene and copolymers of ethylene and higher α-olefins, in the form of granules, with low levels of electron or gamma irradiation in the presence of an atmosphere of steam.

Polyethylene is used in a wide variety of end-uses especially as a packaging material, as pipe and in the form of moulded articles. Irradiation of polyethylene affects the properties of the polyethylene, especially with regard to the processing of the polyethylene in the fabrication of articles therefrom, and may provide benefits in such processing.

Irradiation of polyethylene is known in the art but such irradiation has primarily been conducted on fabricated articles e.g. on film to be used as a packaging material, fibre, sheet or moulded articles, and/or at relatively high dosage levels e.g. at least 2 Mrads of irradiation. Examples of such known irradiation processes are the processes disclosed in U. S. Patents 2 855 517 of W. C. Rainer et al, issued 1958 October 7; 2 863 812 of B. Graham, issued 1958 December 9; 2 906 678 of E. J. Lawton et al, issued 1959 September 29; 2 919 473 of Q. P. Cole, issued 1960 January 5; and 3 783 115 of G. Zeppenfeld, issued 1974 January 1; and Canadian Patents 579 522 of L. G. Brazier et al, issued 1959 July 14; 638 387 of E. J. Lawton et al, issued 1962 March 20; and 638 448 of E. J. Lawton, issued 1962 March 20.

A method for improving melt strength and melt extensibility of polyethylene having a density of 0.95-0.97 and a melt index, as determined by the procedure of ASTM D-1238 (Condition E), of 3-13 dg/min, is disclosed in U. S. Patent 3 563 870 of L. H. Tung et al, issued 1971 February 16. The method involves exposing the polyethylene to 0.05-0.15 Mrad of high energy radiation. The irradiation of poly-α-olefins having a density of at least 0.94 with about $10^5$ to $10^{11}$ roentgens of irradiation, which corresponds to an absorption of approximately 0.1 to $10^5$ Mrads of irradiation for polyethylene, is disclosed in Canadian Patent 605 124 of K. R. Mills, issued 1960 September 13. A process for the production of an intimate dispersion of carbon black and a poly-α-olefin by subjecting the polymer to ionizing radiation and subsequently admixing carbon black therewith is disclosed by B. G. Harper et al in U. S. Patent 3 130 139, issued 1964 April 21.

Although techniques for the irradiation of polyethylene have been known for many years, the use of irradiation to improve and alter the properties of polyethylene with respect to the processability of the polyethylene in the fabrication of products and/or the properties of products fabricated from polyethylene has been limited, primarily because of economic considerations.

A process for the irradiation of polyethylene that is capable of being used on a commercial-scale has now been found.

Accordingly the present invention provides a process for the irradiation of a polyethylene selected from the group consisting of homopolymers of ethylene and copolymers of ethylene and higher α-olefins having 4-10 carbon atoms, and blends and mixtures thereof, comprising the steps of:

(a) subjecting said polyethylene, in the form of granules, to an atmosphere of steam at a temperature of at least 80°C but less than the temperature of agglomeration of the granules for a minimum period of time inversely related to said temperature, said minimum period of time being in the range from 90 minutes when the temperature is 80°C to 20 minutes when the temperature is near that of agglomeration;

(b) irradiating said polyethylene at a temperature less than the temperature of agglomeration of the granules with irradiation selected from the group consisting of electron and gamma irradiation, in an inert atmosphere, the amount of said irradiation being less than 1.5 Mrad; and

(c) substantially reducing the level of free radicals in the irradiated polyethylene by subjecting said polyethylene to an atmosphere of steam at a temperature of at least 80°C but less than the temperature of agglomeration of the granules of irradiated polyethylene for a minimum period of time inversely related to said temperature, such that (i) when the irradiation is electron irradiation, the minimum period is in the range from 75 minutes when the temperature is 80°C to 30 minutes when the temperature is near that of agglomeration of the irradiated polymer, and (ii) when the irradiation is gamma irradiation, the minimum period is in the range from 20 minutes when the temperature is 80°C to 10 minutes when the temperature is near that of agglomeration of the irradiated polymer.

In a preferred embodiment of the process of the present invention the amount of irradiation is 0.05-0.75 Mrad.

As stated above the present invention relates to the irradiation of polyethylene. The polyethylene may be a homopolymer of ethylene or a copolymer of ethylene and a higher α-olefin having 4-10 carbon atoms. Such homopolymers and copolymers may be blended together or admixed prior to or even after irradiation. It is preferred that the higher α-olefin have 4-8 carbon atoms and be a linear α-olefin. Examples of such α-olefins are butene-1, hexene-1 and octene-1. Homopolymers of ethylene and copolymers of ethylene and a higher α-olefin are commercially available and may be manufactured by a variety of polymerization techniques.

The polyethylene irradiated in the process of the present invention is in the form of granules and not in the form of sheet, film or other fabricated shapes. In particular the granules may be pellets, powder or the like e.g. the shapes of polyethylene that are normally fed to processing equipment e.g. extruders, used in the fabrication of articles from polyethylene.

In the process the granules of polyethylene are first subjected to an atmosphere of steam. The temperature of the steam should be less than the temperature at which agglomeration of the granules tends to occur. The temperature of agglomeration will depend on the particular polyethylene that is to be irradiated, for example, the polymerization process used in its manufacture, density, melt index and comonomer content, as will be understood by those skilled in the art. In addition the temperature of the steam should be at least 80°C, and preferably at least 100°C, in order to expedite the treatment of the granules, especially to facilitate reduction of the oxygen content of the granules.

The period of time selected for the steam treatment of the granules depends in particular on the temperature of the steam. When the temperature of the steam is near that of the agglomeration of the granules the treatment time should be at least 20 minutes. Similarly when the temperature is 80°C the treatment time should be at least 90 minutes. At intermediate temperatures the minimum treatment time is intermediate between 20 and 90 minutes, on a pro-rata basis. Longer treatment times may be used.

The granules of polyethylene may be treated with steam by any convenient method. Batch or continuous treatment processes may be used although the latter are preferred. For example the granules may be placed in a vessel or container and contacted with steam, especially by passing the steam counter-current to the flow of granules in a vessel, or by passing the granules through an atmosphere of steam, for example, using a conveying system.

After treating with steam for at least the minimum period of time specified above, the granules are irradiated with electron or gamma irradiation. The granules should remain out of contact with oxygen during the irradiation step. The irradiation should be carried out in an inert oxygen-free atmosphere and an atmosphere of steam is convenient and preferred. The temperature at which the irradiation is conducted is less than the temperature of agglomeration of the granules but preferably at least 80°C. The granules are subjected to irradiation in an amount that is less than 1.5 Mrad. Preferably the amount of irradiation is in the range of 0.05-0.75 Mrad of irradiation and particularly 0.3-0.7 Mrad of irradiation. The amount of irradiation will depend, in particular, on the intended end-use of the irradiated granules and especially on the degree of change in properties of the polymer that is desired. Higher levels of irradiation may result in undesirable effects, especially the formation of gel. As used herein, gel refers to that matter which remains after Soxhlet extraction of polyethylene using xylene as solvent and a 200 TYLER® mesh wire screen in the extraction apparatus. Irradiation normally does not cause formation of significant amounts of gel until the amount of irradiation exceeds a predetermined level, dependent on the particular polyethylene being irradiated, after which gel forms rapidly on further irradiation. Gel formation in amounts of more than 0.1%, by weight, is outside the scope of this invention in the unlikely event that it should occur.

Sources of electron and gamma irradiation are known and any convenient source may be used. The intensity of the irradiation may be varied over a wide range. The intensity selected will depend primarily on availability of a suitable source of irradiation and the time required to provide the required amount of irradiation.

The irradiated granules of polyethylene contain free radicals that are capable of reacting with oxygen and thereby affecting the properties of the polymer, especially the properties of articles fabricated therefrom, over a period of time. To substantially reduce the level of free radicals in the irradiated polyethylene, the irradiated granules are subjected to an atmosphere of steam at a temperature of at least 80°C but less than the temperature of agglomeration of the granules of irradiated polymer. Preferably the temperature is at least 100°C. The period of time selected for the steam treatment will usually depend on whether the irradiation used was electron irradiation or gamma irradiation because electron irradiation to a given degree of irradiation can usually be carried out in a shorter period of time than gamma irradiation, thereby giving the free-radicals less opportunity to decay prior to completion of irradiation. When the irradiation is electron irradiation, the irradiated granules should be subjected to steam for at least 75 minutes when the steam temperature is 80°C and for at least 30 minutes when the steam temperature is near the temperature of agglomeration of the irradiated polymer granules. At intermediate temperatures the minimum treatment time is intermediate between 30 and 75 minutes, on a pro rata basis. Longer treatment times may be used. Similarly when the irradiation is gamma irradiation, the granules should be subjected to steam for at least 20 minutes when the temperature is 80°C and at least 10 minutes when the temperature is near the temperature of agglomeration of the irradiated polymer granules.

The irradiated polyethylene may be used in a wide variety of end-uses, using conventional techniques, especially end-uses that are the same or similar to end-uses for non-irradiated polyethylene. Such end-uses include fabrication into film, pipe and other articles e.g. using extrusion, injection moulding and blow moulding techniques. The irradiated polyethylene may exhibit improved processability and/or improved product properties when compared with the corresponding non-irradiated polyethylene.

The polyethylene to be irradiated may contain antioxidants and other stabilizers, fillers, pigments and the like. However some additives, especially stabilizers, may in general be affected by irradiation and increased levels of such stabilizers may be necessary in the polymer to be irradiated in order that the irradiated polymer will contain the desired level of effective additive. Moreover the use of some additives, especially stabilizers, may result in the formation of colour on irradiation and therefore the use of such additives may not be desirable.

The irradiation of polyethylene containing carbon black is disclosed in the copending patent application of P.Y. Kelly and G. White filed on the same day as the present application.

The present invention is further illustrated by the following examples.

EXAMPLE I

Pellets of SCLAIR® 2909 polyethylene, an ethylene homopolymer having a density of 0.96 and a melt index of 16, were subjected to an atmosphere of steam at a temperature of 108°C for a period of 45 minutes, irradiated with gamma irradiation in steam at 108°C and then subjected to an atmosphere of steam at 108°C for a further period of 10 minutes. The zero shear viscosity, a parameter pertinent to the processability of polymers, of the irradiated pellets was then measured using the following procedure:

Using the plastometer described in the procedure of ASTM D-1238, various lengths of polymer were extruded at 190°C and allowed to hang freely from the plastometer die. The period of time required until the extruded polymer separated (dropped) from the die was measured. From a series of measurements the weight of polymer that would separate in three minutes was interpolated. The zero shear viscosity was obtained from a previously determined correlation between that weight of polymer and melt viscosity at a shear rate of $0.001$ $sec^{-1}$ measured on a Weissenberger® rheogoniometer.

As a comparison, pellets of SCLAIR® 2909 polyethylene were irradiated in air without subjecting to an atmosphere of steam either before or after irradiation. The zero shear viscosity of the irradiated pellets was measured. The results obtained were as follows:

| Irradiation Dose (Mrad) | Zero Shear Viscosity (kPa.s) | |
|---|---|---|
| | Steam Irradiation | Air Irradiation |
| 0 | 0.65 | 0.65 |
| 0.5 | 7.6 | 1.2 |
| 0.75 | 27.5 | 1.9 |
| 1.0 | 20 | 4.2 |
| 1.5 | 400 | 14.7 |

Irradiation in steam had a more pronounced effect on zero shear viscosity than irradiation in air. Moreover, the colour of the pellets irradiated in steam was unchanged but the pellets irradiated in air became slightly but significantly yellow in colour.

- 8 -

EXAMPLE II

The procedure of Example I was repeated using pellets of SCLAIR® 51-35B, an ethylene/butene-1 copolymer having a density of 0.945 and a melt index of 0.42.

The results were as follows:

| Irradiation Dose | Zero Shear Viscosity (kPa.s) | |
|---|---|---|
| (Mrad) | Steam Irradiation | Air Irradiation |
| 0 | 59 | 59 |
| 0.1 | 175 | - |
| 0.2 | 370 | - |
| 0.3 | 670 | - |
| 0.4 | 1100 | - |
| 0.5 | - | 350 |
| 1.0 | - | 840 |

EXAMPLE III

Pellets of SCLAIR® 58A polyethylene, an ethylene copolymer having a density of 0.955 and a melt index of 0.43, were subjected to an atmosphere of steam at a temperature of 100°C for a period of 45 minutes, irradiated with gamma irradiation in steam and then subjected to an atmosphere of steam for a further period. The colour of the irradiated pellets was then measured, as a yellowness index, using a HUNTER* Model D-25 Optical Sensor, a L/a/b type colour/colour difference spectophotometer, and compared with that of the pellets before irradiation.

As a comparison, pellets of SCLAIR® 58A were subjected to an atmosphere of nitrogen at 110°C for a period of 120 minutes, irradiated in nitrogen at 20°C and then subjected to an atmosphere of nitrogen at 20°C for a further period of 24 hours. The colour of the irradiated pellets was measured.

The results obtained were as follows:

| Irradiation Dose | Increase in Yellowness Index | |
|---|---|---|
| (Mrad) | Steam Irradiation | Nitrogen Irradiation |
| 0.25 | 0.25 | 3.0 |

* denotes trade mark

Irradiation in steam had a less pronounced effect on colour than irradiation in nitrogen.

## EXAMPLE IV

Pellets of polyethylene were irradiated in steam according to the process of the present invention. For comparison, pellets of polyethylene were irradiated in air.

The induction period, for oxidation, was measured using the melt oxidative stability test described in Canadian Patent No. 1 083 935 of J. D. Trizisky, issued 1980 August 19.

The results were as follows:

| Polymer* | Irradiation Atmosphere | Irradiation Dose (Mrad) | Induction Test Temperature (°C) | Induction Period (min) |
|---|---|---|---|---|
| A | - | 0 | 180 | 19.6 |
| A | Air | 0.4 | 180 | 5.6 |
| A | Steam | 0.4 | 180 | 18.8 |
| B | - | 0 | 190 | 41.0 |
| B | Air | 1.5 | 190 | 5.0 |
| B | Steam | 0.75 | 190 | 22.0 |

* A was SCLAIR® 58A polyethylene; and
  B was SCLAIR® 2909 polyethylene

It should be noted that irradiation in steam to a dosage of 0.75 Mrad is equivalent, on the basis of melt viscosity, to irradiation in air to a dosage of 1.5 Mrad.

## EXAMPLE V

An ethylene copolymer having a density of 0.955 and a melt index of 0.4 was irradiated with gamma irradiation according to the process of the present invention to an irradiation dose level of 0.1 Mrad. The irradiated polymer was fabricated into one gallon (4.54 1) bottles using blow-moulding techniques. The environmental stress crack resistance of the bottles was then measured using the procedure of ASTM D 2561 (procedure A), the stress cracking agent being a 2% solution of IGEPAL* CO-630 in distilled

* denotes trade mark

- 10 -

water.  After 2000 hours 27% of the bottles had failed.

As a comparison the above procedure was repeated using copolymer that had not been irradiated.  After 2000 hours 50% of the bottles had failed, thus illustrating the increased environmental stress crack resistance of the bottles fabricated from the irradiated polymer.

### EXAMPLE VI

Pellets of SCLAIR® 58A polyethylene, an ethylene copolymer having a density of 0.955 and a melt index of 0.42, were irradiated with gamma irradiation according to the present invention.  The pellets were then used in the manufacture of bottles (70 g) using an IMPCO® blow-moulding apparatus.  The blow moulding process was adjusted so as to determine the minimum cycle time at which the most commercially acceptable bottles could be moulded.

The results were as follows:

| Irradiation Dose (Mrad) | Minimum Cycle Time (sec) | Comments |
|---|---|---|
| 0 | 10 | poor definition of bottle threads |
| 0.25 | 5 | good bottles |
| 0.50 | 5 | good bottles |
| 0.85 | 6 | some deformation of bottles |

### EXAMPLE VII

The properties of irradiated and non-irradiated pellets of SCLAIR® 2909 polyethylene were compared in an injection moulding process.  The cycle time for the injection moulding process was the time for the polymer to "setup" in the mould, as measured by mould cavity pressure.

It was found that the use of SCLAIR® 2909 polyethylene irradiated with 0.75 Mrad of irradiation, according to the process of the present invention, resulted in an 8% reduction in the cycle time required for the non-irradiated polymer.  For SCLAIR® 2909 polyethylene that had been irradiated in air, it was found that 1.5 Mrad of irradiation were necessary in order to achieve a similar result.

- 11 -

The samples moulded from irradiated SCLAIR® 2909 polyethylene pellets had a higher impact strength, as measured by an IZOD impact test (ASTM D 256), than the samples moulded from non-irradiated pellets.

EXAMPLE VIII

Pellets of SCLAIR® 58A polyethylene, an ethylene copolymer having a density of 0.955 and a melt index of 0.43 were subjected to an atmosphere of steam at a temperature of 100°C, irradiated in a steam atmosphere at 100°C to an irradiation dose of 0.25 Mrad with a 3000 kV electron beam, subjected to steam at 100°C for a further 60 minutes and allowed to age in air for several weeks. The colour of the irradiated pellets was measured using a COLOURMASTER* Model V optical sensor.

As a comparison the above procedure was repeated except that the post-irradiation treatment with steam was omitted.

The results were as follows:

|  | Increase in Yellowness Index |
|---|---|
| Post-Irradiation Steaming | 0.5 |
| No Post-Irradiation Steaming | 4.0 |

EXAMPLE IX

Pellets of SCLAIR® 11R polyethylene, an ethylene copolymer having a density of 0.920 and a melt index of 1.6, were irradiated according to the present invention. The zero shear viscosity of the irradiated pellets was measured using the procedure of Example I.

As a comparison, pellets of SCLAIR® 11R polyethylene were irradiated in air without subjecting to an atmosphere of steam either before or after irradiation. The zero shear viscosity of the irradiated pellets was measured.

The results obtained were as follows:

* denotes trade mark

| Irradiation Dose | Zero Shear Viscosity (kPa.s) | |
| :---: | :---: | :---: |
| (Mrad) | Steam Irradiation | Air Irradiation |
| 0 | 8.2 | 8.2 |
| 0.1 | 25 | 12 |
| 0.2 | 80 | |
| 0.3 | 185 | 26 |
| 0.4 | 350 | |
| 0.5 | | 57 |

Irradiation in steam had a more pronounced effect on zero shear viscosity than irradiation in air.

CLAIMS :

1. A process for the irradiation of a polyethylene selected from the group consisting of homopolymers of ethylene and copolymers of ethylene and higher α-olefins having 4-10 carbon atoms, and blends and mixtures thereof, comprising the steps of:

(a) subjecting said polyethylene, in the form of granules, to an atmosphere of steam at a temperature of at least 80°C but less than the temperature of agglomeration of the granules for a minimum period of time inversely related to said temperature, said minimum period of time being in the range from 90 minutes when the temperature is 80°C to 20 minutes when the temperature is near that of agglomeration;

(b) irradiating said polyethylene at a temperature less than the temperature of agglomeration of the granules with irradiation selected from the group consisting of electron and gamma irradiation, in an inert atmosphere, the amount of said irradiation being less than 1.5 Mrad; and

(c) substantially reducing the level of free radicals in the irradiated polyethylene by subjecting said polyethylene to an atmosphere of steam at a temperature of at least 80°C but less than the temperature of agglomeration of the granules of irradiated polyethylene for a minimum period of time inversely related to said temperature, such that

(i) when the irradiation is electron irradiation, the minimum period is in the range from 75 minutes when the temperature is 80°C to 30 minutes when the temperature is near that of agglomeration of the irradiated polymer, and

(ii) when the irradiation is gamma irradiation, the minimum period is in the range from 20 minutes when the temperature is 80°C to 10 minutes when the temperature is near that of agglomeration of the irradiated polymer.

2. The process of Claim 1 in which, in step (b), the inert atmosphere is steam.

3. The process of Claim 1 or Claim 2 in which, in step (a), the temperature is at least 100°C.

4.  The process of any one of Claims 1-3 in which, in step (c), the temperature is at least 100°C.

5.  The process of any one of Claims 1-4 in which the amount of irradiation is in the range of 0.05-0.75 Mrad.

6.  The process of any one of Claims 1-4 in which the amount of irradiation is in the range of 0.3-0.7 Mrad.

7.  The process of any one of Claims 1-6 in which the irradiation is electron irradiation.

8.  The process of any one of Claims 1-6 in which the irradiation is gamma irradiation.

9.  The process of any one of Claims 1-8 in which the polyethylene is a homopolymer of ethylene.

10. The process of any one of Claims 1-8 in which the polyethylene is a copolymer of ethylene and a higher $\alpha$-olefin having 4-8 carbon atoms.

11. The process of Claim 10 in which the higher $\alpha$-olefin is butene-1.